# EUROPÄISCHE PATENTSCHRIFT

(11) **EP 2 443 437 B1**
(45) Veröffentlichungstag und Bekanntmachung des Hinweises auf die Patenterteilung: **31.08.2016**
(21) Anmeldenummer: 10728129.7
(22) Anmeldetag: 18.06.2010
(51) Int. Cl.: G01S 13/88, G01S 13/89, G01S 13/90, G01N 21/35, G01V 8/00, H01Q 3/46, H01Q 19/19

(54) **VERFAHREN UND VORRICHTUNG ZUR DETEKTION VON VERDECKTEN GEGENSTÄNDEN MITTELS ELEKTROMAGNETISCHEN MM-WELLEN**
METHOD AND DEVICE FOR DETECTING HIDDEN OBJECTS BY MEANS OF ELECTROMAGNETIC MILLIMETER WAVES
PROCÉDÉ ET DISPOSITIF DE DÉTECTION D'OBJETS CACHÉS AU MOYEN D'ONDES ÉLECTROMAGNÉTIQUES MILLIMÉTRIQUES

(30) Priorität: 19.06.2009 DE 102009029913
(43) Veröffentlichungstag der Anmeldung: 25.04.2012
(73) Patentinhaber: Smiths Heimann GmbH, 65205 Wiesbaden (DE)
(72) Erfinder: JECK, Michael, 55122 Mainz (DE); VOLZ, Claudius, 64342 Seeheim-Jugenheim (DE)
(74) Vertreter: Greif, Thomas
(86) Internationale Anmeldenummer: PCT/EP2010/003677
(87) Internationale Veröffentlichungsnummer: WO 2010/145831

(56) Entgegenhaltungen:
- EP-A2- 0 812 028
- EP-A2- 1 980 817
- WO-A1-2006/105977
- WO-A1-2010/143174
- WO-A2-2007/027827
- US-A1- 2008 116 374
- DAVID M POZAR ET AL: "Design of Millimeter Wave Microstrip Reflectarrays" IEEE TRANSACTIONS ON ANTENNAS AND PROPAGATION, IEEE SERVICE CENTER, PISCATAWAY, NJ, US, Bd. 45, Nr. 2, 1. Februar 1997 (1997-02-01), XP011002907 ISSN: 0018-926X
- KAOUACH H ET AL: "Design and demonstration of an X-band transmit-array" ANTENNAS AND PROPAGATION, 2009. EUCAP 2009. 3RD EUROPEAN CONFERENCE ON, IEEE, PISCATAWAY, NJ, USA, 23. März 2009 (2009-03-23), Seiten 1191-1195, XP031470002 ISBN: 978-1-4244-4753-4
- SORRENTINO R ET AL: "Recent advances on millimetre wave reconfigurable reflectarrays", 3RD EUROPEAN CONFERENCE ON ANTENNAS AND PROPAGATION. EUCAP 2009 , 23-27 MARCH 2009 - BERLIN, GERMANY, IEEE, PISCATAWAY, NJ, USA, 23 March 2009 (2009-03-23), pages 2527-2531, XP031470303, ISBN: 978-1-4244-4753-4

## Beschreibung

Die Erfindung betrifft ein Verfahren zur Detektion von verdeckten Gegenständen mittels elektromagnetischen mm-Wellen, insbesondere von Gegenständen, die von Personen mitgeführt werden.

Zur Kontrolle von Personen wie Flugpassagieren auf verdächtige Gegenstände, beispielsweise Waffen oder Sprengstoff, sind Verfahren bekannt, bei denen die Personen mit mm-Wellen abgescannt werden. Derartige Verfahren und Vorrichtungen sind in der WO 2006/105997 A1 und der WO 2007/028472 A1 beschrieben.

Um von Personen am Körper mitgeführte Gegenstände zu detektieren sollen dicht am mm-Wellen-Scanner, im sogenannten Nahfeld, Tiefenprofile aufgenommen werden. Mit Hilfe dieser Tiefenprofile lassen sich die reflektierenden Signale von schwach reflektierenden Objekten nachweisen, die normalerweise von den Signalen stärker reflektierender Objekte in anderen Tiefenschichten verdeckt werden. Beispiele für schwach reflektierende Objekte, deren Signale von stark reflektierenden Objekten verdeckt werden, sind Sprengstoff-Folien, die geringe mm-Wellen-Reflektion aufweisen, auf menschlicher Haut, die mm-Wellen stark reflektiert Ebenso werden die Signale von schwach reflektierenden Plastikminen, die sich unter der stark reflektierenden Erdoberfläche befinden, verdeckt.

Üblicherweise erfolgt die Tiefenauflösung mittels mm-Wellen durch Aussendung und Auswertung von extrem kurzen Pulsen oder durch Frequenzmodulation wie beim FMCW-Radar. Eine mögliche Sonderform des FMCW-Radars ist das sogenannte Stepped-FMCW-Radar, bei dem diskrete Frequenzen benutzt werden, die mit Hilfe von FourierTransformation zu Pulsen im Zeitbereich zurückgerechnet werden. Alle diese Verfahren benötigen eine sehr große Bandbreite, falls eine Tiefenauflösung von einigen Zentimetern gefordert wird. So ist für eine Tiefenauflösung von 1,5 cm eine Bandbreite von 10 GHz notwendig. Bei Verwendung des Stepped-FMCW-Radars ist zur Vermeidung von Scheinzielen eine relativ kleine Schrittweite der Frequenzen erforderlich. So ist für einen Eindeutigkeitsbereich von 1,5 m eine maximale Schrittweite von 100 MHz erlaubt.

Diese Anforderungen sind technisch nur sehr schwierig zu und sehr aufwendig zu realisieren. Weiterhin ist es schwierig, von den Behörden Genehmigungen für die Benutzung von genügend großen Bandbreiten zu erhalten. Es wurde daher versucht, Modellverfahren zu benutzen, um bei geringer Bandbreite die benötigte Auflösung zu erhalten. Diese Verfahren sind sehr aufwendig und für Echtzeitsysteme nicht einsetzbar.

Weitere Verfahren zur Detektion verdeckter Gegenstände sind aus folgenden Druckschriften bekannt. EP0812028A2 offenbart die Verwendung von Phased-Array-Antennen zur dreidimensionalen Abtastung von Objekten mittels mm-Wellen. Aus US2008/116374A1 ist ein Terahertz-Scanner bekannt, der durch Veränderung der Sendeleistung eine Tiefenauflösung bewirkt. EP1980817A2 offenbart ein THz-Abbildungssystem, bei welchem ein Fokuspunkt durch einen drehbaren Spiegel und eine Verschiebung der fokussierenden Linse in drei Dimensionen gescannt wird. WO2007/027827A2 offenbart ein Millimeterwellenabbildungssystem für Sicherheitsanwendungen, bei welchem ein Antenne frequenzabhängig in verschiedene vertikaler Richtungen sendet und die Sendestrahlung über einen elliptischen Zylinderspiegel horizontal fokussiert wird. Die Fokusdistanz kann über eine mechanischen Verformung des Spiegels verändert werden. Aus WO2006/105977A1 ist ein Millimeterwellenabbildungssystem für Sicherheitsanwendungen bekannt, das nach dem SAR-Prinzip (synthetische Apertur) arbeitet. Schließlich offenbaren Pozart et al., IEEE Transactions on Antennas and Propagation, Bd. 45, Nr. 2, XP011002907 sowie Kaouach et al., 3rd European Conference on Antennas and Propagation, 2009, Seiten 1191-1195, XP031470002 und Sorrentino et al., 3rd European Conference on Antennas and Propagation 2009, Seiten 2527-2531, XP031470303 phasengesteuerte Arrays, die in Reflexion oder Transmission zur Fokussierung von mm-Wellen eingesetzt werden.

Der Erfindung liegt daher die Aufgabe zugrunde, ein Verfahren zur Detektion von verdeckten Gegenständen mittels elektromagnetischer mm-Wellen zu schaffen, das technisch weniger aufwendig eine gute Tiefenauflösung ermöglicht.

Diese Aufgabe wird nach der Erfindung durch eine Vorrichtung gemäß Anspruch 1 und ein Verfahren gemäß Anspruch 3 gelöst, wobei jeweils mm-Wellen beim Bestrahlen eines Prüfobjekts auf verschiedene Tiefenschichten des Prüfobjekts fokussiert werden.

Zur Durchführung des Verfahrens weist eine Vorrichtung eine Sendeantenne für elektromagnetische mm-Wellen, eine Empfangsantenne zum Empfangen vom Prüfobjekt reflektierter Wellen, ein Auswertesystem und ein fokussierendes Element auf, von dem die von der Sendeantenne ausgesandten Wellen auf verschiedene Tiefenbereiche des Prüfobjekts fokussiert werden. Der Einsatz einer kombinierten Sende- und Empfangsantenne ist ebenfalls möglich.

Die Erfindung nutzt dabei die Eigenschaften einer Fokussierung aus. Die Energie wird auf einen Punkt fokussiert, und die Energiedichte fällt vor und hinter diesem Punkt ab. Die Stärke des Abfalls und damit die Tiefenauflösung hängt vom Einfallswinkel α der Strahlen auf das Prüfobjekt ab.

Es lassen sich so Objekte unterschiedlichen Abstands zu den Antennen basierend auf einer ausreichenden Tiefenauflösung unterscheiden. Es wird so eine ausreichende Tiefenauflösung mit monofrequenten mm-Wellen-Scannern ermöglicht.

Als weiterer Vorteil tritt hinzu, dass das Verfahren für ein Echtzeitsystem einsetzbar ist.

Das fokussierende Element ist als Reflektor ausgestaltet. Dies ermöglicht es, platzsparend die Sendeantenne zwischen dem fokussierenden Element und dem Prüfobjekt anzuordnen. Dies ist möglich, da Abschattungen von Wellen im mittleren Bereich nur geringe Auswirkungen auf die Tiefenauflösung haben, während Abschattungen der äußeren Strahlen vermieden werden sollen.

Nachfolgend wird die Erfindung anhand von Ausführungsbeispielen näher erläutert. Dabei zeigt
Figur 1 eine Skizze des Grundprinzips der Erfindung und
die Figuren 2-4 in schematischer Darstellung verschiedene Ausführungsformen.

Das nachfolgend beschriebene System ist zur Kontrolle von Passagieren und Gepäckstücken auf verdächtige Gegenstände wie Waffen oder Sprengstoff bestimmt. Das System ist bei weiteren Anwendungen einsetzbar, bei denen ein Prüfobjekt mit mm-Wellen bestrahlt und vom Prüfobjekt reflektierte mm-Wellen ausgewertet werden, um einen verdeckten, nicht sichtbaren Gegenstand zu detektieren.

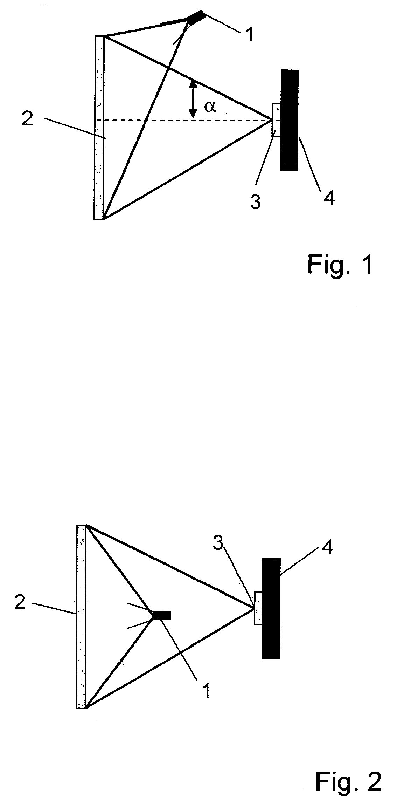

In Figur 1 ist das Prinzip des Verfahrens mit den grundlegenden Teilen der Vorrichtung zu seiner Durchführung dargestellt. Eine Sendeantenne 1 für elektromagnetische mm-Wellen bestrahlt ein fokussierendes Element 2, von dem die von der Sendeantenne 1 ausgesandten Wellen auf das Prüfobjekts fokussiert werden. Das fokussierende Element 2 ist daher so gestaltet, dass der Fokus der ausgesandten Wellen auf verschiedene Tiefenbereiche 3, 4 des Prüfobjekts eingestellt werden kann.

Das fokussierende Element 2 ist - wie im Ausführungsbeispiel dargestellt - als Reflektor ausgestaltet und besteht aus einem Array von Reflektionsantennen, deren Phasenverschiebung elektronisch einstellbar ist.

Die elektromagnetische Welle wird von dem fokussierenden Element 2 auf das Prüfobjekt gerichtet. Die Fokussierung wird dabei so eingestellt, dass sich der Fokus zunächst in der ersten Tiefenschicht 3 befindet. Somit liegt die maximale Energiedichte an der Vorderkante der ersten Tiefenschicht 3 an, während die Energiedichte an der zweiten Tiefenschicht 4 reduziert wird. Zum Empfang der reflektierten Wellen ist die Sendeantenne 1 zugleich als Empfangsantenne gestaltet. Ebenso ist es möglich, in dem Array des fokussierenden Elements 2 zusätzlich Empfangsantennen anzuordnen. Da die Antenne 1 eine Sende- und Empfangsantenne ist, durchlaufen die reflektierten Wellen den gleichen Weg wie die vom fokussierenden Element ausgesandten Wellen, nur in umgekehrter Richtung. Die Einstellung des Fokuspunkts erfolgt bevorzugt durch Verschiebung der Phase. Dies wird beispielsweise durch den Einsatz von Patch-Antennen als Reflektionsantennen im fokussierenden Element 2 ermöglicht.

Bei der Prüfung der beiden Schichten 3, 4 wird die Fokustiefe so verändert, dass der Fokus von der Schicht 3 in die Schicht 4 bewegt wird. Die umgekehrte Richtung der Fokussierung ist ebenfalls möglich. Die beiden Schichten 3, 4 des Prüfobjekts lassen sich so getrennt voneinander vermessen und getrennt in einem nicht dargestellten Auswertesystem auswerten, um verdeckte Gegenstände zu detektieren.

Bevorzugt ist das fokussierende Element 2 sehr nahe vor dem Prüfobjekt angeordnet. In Zusammenwirken mit einer geeigneten Formgebung und geeigneten Ausmaßen des fokussierenden Elements 2 lässt sich so der Einfallswinkel α möglichst groß gestalten. Dies führt zu einer verbesserten Tiefenauflösung, da diese proportional zur Wellenlänge und umgekehrt proportional zum Quadrat der numerischen Apertur NA ist. Die numerische Apertur NA ist definiert als der Sinus des Winkels α. Die Tiefenauflösung verbessert sich somit quadratisch mit dem Sinus des Einfallswinkels α. Dieser lässt sich möglichst groß halten, wenn das Prüfobjekt möglichst nahe an dem fokussierenden Element 2 angeordnet ist.

Die Figuren 2-4 zeigen verschiedene Ausführungsformen der Erfindung. Dabei ist die Sende- und Empfangsantenne 1 im Bereich zwischen dem fokussierenden Element 2 und dem Prüfobjekt mit den Tiefenschichten 3, 4 angeordnet. Da auch bei diesen Ausführungsformen die Sendeantenne 1 zugleich als Empfangsantenne für die reflektierten Wellen dient, ist ein platzsparender, symmetrischer Aufbau der Vorrichtung möglich. Die Anordnung der Sende- und Empfangsantenne 1 zwischen dem fokussierenden Element 2 und dem Prüfobjekt hat nur sehr geringe negative Auswirkung auf die gewünschte Tiefenauflösung, da Abschattungen im mittleren Bereich in dieser Hinsicht nur geringe Auswirkungen haben. Abschattungen der äußeren Strahlen sollten zur Vermeidung von Beeinträchtigungen der Tiefenauflösung vermieden werden. Daher erstreckt sich das reflektierende Element 2 nach außen möglichst weit über die Sende- und Empfangsantenne 1 hinaus. So wird zugleich die numerische Apertur vorteilhaft vergrößert.

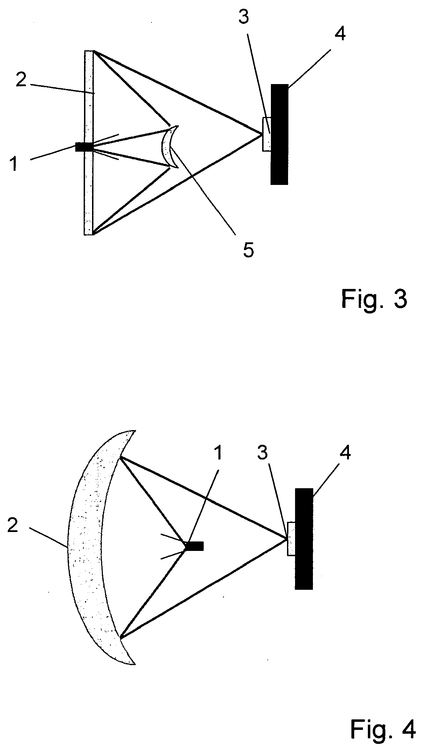

Bei der Ausführungsform nach Figur 3 ist die Sende- und Empfangsantenne 1 in dem Array des fokussierenden Elements 2 angeordnet. Ein zusätzlicher Reflektor 5 lenkt die von der Antenne 1 ausgesandten Strahlen zum fokussierenden Element 2 und die von den Schichten 3, 4 des Prüfobjekts reflektierten Strahlen wieder zur Empfangsantenne 1 zurück. Bei der Ausführungsform nach Figur 4 ist das fokussierende Element 2 nach Art eines Hohlspiegels gekrümmt gestaltet, um die mm-Wellen in den Schichten 3, 4 des Prüfobjekts zu fokussieren.

Als Abtast- und Auswerteverfahren werden entweder monofrequente Verfahren, beispielsweise ein Phase-Array-Verfahren, ein multifrequentes Verfahren, insbesondere ein Stepped-FMCW-Verfahren, oder ein Pulsradarverfahren eingesetzt.

Die Fokussierung ermöglicht bei monofrequenten Verfahren eine Auflösung in der Tiefe des Prüfobjekts. Bei multifrequenten Verfahren werden vorteilhaft bei vorgegebener Bandbreite weniger Frequenzen für eine gewünschte Tiefenauflösung benötigt. Bei Pulsradarverfahren kann durch die Fokussierung bei gleicher Tiefenauflösung die Abtastrate verringert werden.

Auch ist die Kombination mit den eingangs beschriebenen bekannten Verfahren zur Tiefenauflösung möglich. Es lassen sich so auch Modellbasierte Verfahren zur weiteren Verbesserung der Tiefenauflösung einsetzen, und die Anzahl der benötigten Frequenzen lässt sich bei einem Stepped-FMCW-Verfahren deutlich einschränken, da der Eindeutigkeitsbereich durch die Fokussierung deutlich kleiner wird. Zusammengefasst lassen sich wegen der ausreichenden Tiefenauflösung Objekte unterscheiden, die sich in verschiedenen Tiefenschichten befinden und damit unterschiedlichen Abstand zur Abtasteinrichtung aufweisen. So können auch von stark reflektierenden Schichten verdeckte Gegenstände detektiert werden.

Bei den Vorrichtungen zur Durchführung dieser Verfahren können die Sende- und zugehörigen Empfangsantennen in einem Array so nah beieinander positioniert werden, dass sie näherungsweise als kombinierte, quasi-monostatische Sende- und Empfangsantennen wirken.

Alternativ ist es möglich, in einem Array die Sende- und zugehörigen Empfangsantennen mit einem so großen Abstand voneinander anzuordnen, dass sie als bi- oder multistatische Antennen wirken. Bevorzugt ist es dann der Abstand einer Sende- von der zugehörigen Empfangsantenne größer als eine Wellenlänge.

Alle vorstehend beschriebenen Antennen werden vorteilhaft in einem Antennenarray angeordnet. Ist das Array als aktives Antennenarray gestaltet, so sind die Phasen und / oder Amplituden der einzelnen Elemente einstellbar.

## Patentansprüche

1. Vorrichtung zur Detektion von verdeckten Gegenständen mittels elektromagnetischen mm-Wellen mit
- einer oder mehreren Sendeantennen (1) für elektromagnetische mm-Wellen,
- einer oder mehrerer Empfangsantennen zum Empfangen vom Prüfobjekt reflektierter Wellen,
- einem Auswertesystem und
- einem fokussierenden Element (2), das als Reflektor ausgestaltet ist,
**dadurch gekennzeichnet, dass** das fokussierende Element (2) als Array von Reflektionsantennen mit einstellbarer Phasenverschiebung gestaltet ist und mit dem fokussierenden Element (2) die von der Sendeantenne (1) ausgesandten Wellen nacheinander auf verschiedene Tiefenschichten (3, 4) des Prüfobjektes fokussiert werden.

2. Vorrichtung nach Anspruch 1, **gekennzeichnet durch** eine zwischen dem fokussierenden Element (2) und dem Prüfobjekt angeordnete Sende- und Empfangsantenne (1) für mm-Wellen.

3. Verfahren zur Kontrolle von Passagieren und Gepäckstücken auf verdächtige Gegenstände mit einer Vorrichtung gemäß Anspruch 1 oder 2.

## Claims

1. Device for detecting hidden articles by means of electromagnetic mm waves comprising
- one or a plurality of transmitting antennas (1) for electromagnetic mm waves,
- one or a plurality of receiving antennas for receiving waves reflected from the inspection object,
- an evaluation system, and
- a focussing element (2) configured as a reflector,
**characterized in that** the focussing element (2) is fashioned as an array of reflection antennas having an adjustable phase shift, and, by means of the focussing element (2), the waves emitted by the transmitting antenna (1) are focussed successively onto different depth layers (3, 4) of the inspection object.

2. Device according to Claim 1,
**characterized by** a transmitting and receiving antenna (1) for mm waves that is arranged between the focussing element (2) and the inspection object.

3. Method for monitoring passengers and items of luggage for suspicious articles using a device according to Claim 1 or 2.

## Revendications

1. Dispositif destiné à détecter des objets cachés au moyen d'ondes électromagnétiques millimétriques, avec
- une ou plusieurs antennes émettrices (1) d'ondes électromagnétiques millimétriques,
- une ou plusieurs antennes réceptrices destinées à réceptionner des ondes réfléchies par l'objet de test,
- un système d'évaluation et
- un élément (2) de focalisation qui est conçu sous la forme d'un réflecteur,
**caractérisé en ce que** l'élément (2) de focalisation est conçu sous la forme d'un système d'antennes de réflexion avec un déphasage réglable et **en ce qu'**à l'aide de l'élément (2) de focalisation, les ondes émises par l'antenne émettrice (1) sont focalisées successivement sur différentes couches de profondeur (3, 4) de l'objet de test.

2. Dispositif selon la revendication 1,
**caractérisé par** une antenne émettrice et réceptrice (1) pour des ondes millimétriques, placée entre l'élément de focalisation (2) et l'objet de test.

3. Procédé destiné à contrôler des passagers et des pièces de bagage au niveau de la présence d'objets suspects, avec un dispositif selon la revendication 1 ou la revendication 2.
